# EUROPEAN PATENT APPLICATION

(11) **EP 4 790 358 A1**
(43) Date of publication of application: **12.08.2026**
(21) Application number: 25156357.3
(22) Date of filing: 06.02.2025
(51) Int. Cl.: G01B 5/008, G01B 5/28, G01B 21/04

(54) **MEASUREMENT METHOD AND APPARATUS**

(71) Applicant: Renishaw plc, Wotton-under-Edge, Gloucestershire GL12 8JR (GB)
(72) Inventor: The designation of the inventor has not yet been filed
(74) Representative: Dunn, Paul Edward

(57) **Abstract**

A method is described of using a directional scanning probe (40, 100,170) that comprises a stylus (12, 42, 68, 102) extending from a probe body (10, 44) and measuring transducers (42) for producing stylus deflection data (a,b,c,) describing the magnitude and direction of stylus deflection. The method comprises using a coordinate positioning apparatus (1) to move the directional scanning probe (40, 100,170) towards an object (6, 60, 71, 126) along an inspection path that is nominally normal to a surface of the object (6, 60, 71, 126), the motion along the inspection path causing the stylus (12, 42, 68, 102) to make contact with the surface of the object (6, 60, 71, 126) and thereafter deflect in a first stylus deflection direction (70, 80, 110) relative to the probe body (10, 44). Stylus deflection data (a,b,c) are collected at a plurality of different collection positions along the inspection path, the plurality of different collection positions having a known separation from each other. The collected stylus deflection data and the known separation of the collection positions are used to calculate a scaling factor for converting stylus deflection data describing a stylus deflection along the first stylus deflection direction (70, 80, 110) into a scaled stylus deflection value. A workpiece (126) may then be measured using the calculated scaling factor. A corresponding apparatus is also described.

## Description

The present invention relates to the measurement of objects using a scanning probe mounted to a coordinate positioning apparatus, and in particular to an improved technique for calibrating a directional scanning probe carried by a machine tool.

It is known to mount a scanning probe on a coordinate positioning apparatus, such as a machine tool, to measure an object. A typical scanning probe comprises a probe body, a deflectable stylus and one or more transducers for measuring deflection of the stylus relative to the probe body. Various examples of scanning probes suitable for use on a machine tool are described in WO02/061378, WO2019/207293 and WO2023/036887. The coordinate positioning apparatus typically includes multiple position encoders to measure the position of the scanning probe relative to the object to be measured. The stylus deflection measurements taken by the scanning probe can then be combined with the machine position measurements of the coordinate positioning apparatus to allow the position of points on the surface of the object to be measured.

The stylus deflection measurements made by the scanning probe describe deflection of the stylus relative to the probe body in the local coordinate system of the scanning probe (i.e., in the so-called probe coordinate system), whilst the position of the scanning probe relative to the object is measured in the coordinate system of the coordinate positioning apparatus (i.e., in the so-called machine coordinate system). A calibration process is thus typically performed when configuring such apparatus to allow the stylus deflection measurements to be converted from the probe coordinate system into the machine coordinate system.

WO00/25087 describes a scanning probe calibration process that is used to generate a probe transformation matrix that converts stylus deflections measured in the probe coordinate system into deflections in the machine coordinate system. This is done using a numerical process that involves taking measurements of a calibration sphere from at least nine different directions. A differential calibration technique is described in WO2007/125306 that reduces the machine errors that can sometimes be present in the technique of WO00/25087. The method of WO2007/125306 generates a pure probe calibration matrix by scanning a calibration sphere using two scan paths having a known separation.

The present inventors have found various problems with known calibration techniques of the type described above. In particular, for certain styli configurations (e.g. when using surface finish styli) it may not be possible to scan a calibration sphere from the multiple directions necessary to establish an accurate probe transformation matrix. The stylus tip or calibration sphere may also be damaged by such a scanning process, for example if using a sharp tipped surface finish stylus. Furthermore, implementing calibration processes of the type described above can be time-consuming and complex.

According to a first aspect of the present invention, there is provided a method of using a directional scanning probe mounted to a coordinate positioning apparatus, the directional scanning probe comprising a probe body, a stylus extending from the probe body and measuring transducers for producing stylus deflection data describing the magnitude and direction of stylus deflection relative to the probe body in a probe coordinate system, the coordinate positioning apparatus being configured to move the directional scanning probe relative to an object to be measured, the method comprising the steps of;
(i) using the coordinate positioning apparatus to move the directional scanning probe towards the object along an inspection path that is nominally normal to a surface of the object, the motion along the inspection path causing the stylus to make contact with the surface of the object and thereafter deflect in a first stylus deflection direction relative to the probe body,
(ii) collecting stylus deflection data at a plurality of different collection positions along the inspection path, the plurality of different collection positions having a known separation from each other, and
(iii) using the collected stylus deflection data and the known separation of the collection positions to calculate a scaling factor for converting stylus deflection data describing a stylus deflection along the first stylus deflection direction into a scaled stylus deflection value.

The first aspect of the present invention thus relates to a method that is implemented using a directional scanning probe mounted to a coordinate positioning apparatus. The coordinate positioning apparatus may comprise a coordinate measuring machine (CMM), industrial robot, machine tool or the like. In a preferred embodiment described below, the method is implemented on a machine tool. This allows measurements to be taken before or after cutting operations are performed by the same machine tool on the workpiece; i.e., "in-process" measurements are possible.

The method uses a directional scanning probe. The directional scanning probe comprises a probe body that is attached to a first part (e.g., a quill or spindle) of the coordinate positioning apparatus. A stylus extends from the probe body. As explained below, the stylus tip may comprise a ball or other element for contacting an object to be measured. The directional scanning probe also includes measuring transducers for measuring both the magnitude and direction of stylus deflection (i.e., the scanning probe is a directional scanning probe). Such stylus deflection measurements are made relative to probe body in what is typically termed the probe coordinate system. In one embodiment, the directional scanning probe may output stylus deflection values as coordinates (e.g. a, b, c stylus deflection values) in a Cartesian probe coordinate system.

The coordinate positioning apparatus is configured to move the directional scanning probe relative to an object to be measured. The object to be measured may be attached to a second part (e.g., a base or table) of the coordinate positioning apparatus that is moveable relative to the first part of the apparatus to which the directional scanning probe is attached. The coordinate positioning apparatus may then control the motion and hence the relative position of the directional scanning probe and the object. In particular, the coordinate positioning apparatus may be programmable to move the directional scanning probe relative to the object along a path.

The method includes a step (i) in which the directional scanning probe is moved towards the object along an inspection path. The inspection path, which may be pre-programmed into a controller of the coordinate positioning apparatus, causes the stylus to make contact with the surface of the object and subsequently deflect relative to the probe body as the probe motion towards the object continues. The inspection path is configured so that the directional scanning probe moves toward the object along the nominal surface normal of the object (i.e. along a direction nominally perpendicular to the surface of a point on the object). After the stylus has made contact with the object, the stylus deflects in the first stylus deflection direction as the probe motion continues. It should be noted that the motion along the inspection path may be continuous (i.e., there may be motion without stopping). Alternatively, the motion may include one or more dwell periods (e.g., after the stylus has made contact with the surface) in which the relative motion between the directional scanning probe and the object is halted. The motion along the inspection path may be repeated. After being brought into contact with the object, the direction of motion along the inspection path may be reversed (i.e. by moving the directional scanning probe away from the object along the inspection path). In one example, there could be multiple passes back and forth along the inspection path with the scanning probe being halted at different positions along the scan path.

Step (ii) of the method comprises collecting stylus deflection data from the scanning probe during the traversal of the inspection path of step (i). Step (ii) may thus be performed at the same time as step (i). The stylus deflection data is collected at two or more different collection positions along the inspection path. The stylus deflection data may be collected when the probe is moving or when motion has been halted (e.g., during a dwell period). The stylus deflection data for each collection position may be collected during the same traversal of the inspection path, or stylus deflection data may be collected for different collection positions during different traversals of the inspection path. The stylus deflection data may be collected when the directional scanning probe is moving towards or away from the object along the inspection path.

The distance between (i.e., the separation of) the plurality of the collection positions along the inspection path is known. For example, the directional scanning probe may be halted at known (commanded) positions along the inspection path and the stylus deflection data may be collected at such positions. Moving the directional scanning probe along the inspection path at a constant and known speed (feed rate) whilst collecting stylus deflection data at known time intervals would also allow the separation between the collection positions to be known. In this manner, the need to also extract machine position data can be avoided. Alternatively, if access to the machine position data is possible, corresponding machine position data could be collected at the same time as the stylus deflection data is collected.

A scaling factor is calculated in step (iii) using the collected stylus deflection data and the known separation of the collection positions. In particular, the change in stylus deflection between the different collection positions can be used with the known separation of these collection positions to generate the scaling factor. In other words, a scaling factor can be found that relates stylus deflections along the first stylus deflection direction as measured by the scanning probe in the probe coordinate system to distances (deflections) in the machine coordinate system. Although a scaling factor could be calculated from stylus deflection data at two collection positions of known separation, the use of additional collection positions (e.g., three or more collection positions) can improve the accuracy of the scaling factor calculation and help detect any errors (e.g., stick-slip). The scaling factor may be a linear scaling factor. The scaling factor may be a non-linear scaling factor. The scaling factor may comprise a function, such as a polynomial function or an interpolated function. Conveniently, the scaling factor may be a polynomial scaling factor. As explained in more detail below, the calculated scaling factor can be used for subsequent measurements using the same directional scanning probe to obtain scaled stylus deflection data when measuring an object.

The method of the present invention thus comprises calculating a bespoke calibration (i.e. scaling factor) for the first stylus deflection direction. There is no need for the first stylus deflection direction to be aligned with any particular axis of the scanning probe or coordinate positioning apparatus, and the method can be performed even if there are access constraints that limit measurements of a calibration artefact from multiple directions. The need for calibration prior to measurement is also avoided, as is the need to mount bespoke calibration artefacts on the coordinate positioning apparatus. Instead, the above method may be performed as and when required, optionally using the same object that is to be subsequently measured.

Advantageously, the stylus is connected to the probe body by a spring mechanism. The spring mechanism may have an asymmetric spring rate (i.e., different spring forces may be provided in different stylus deflection directions). For example, the spring mechanism may be stiffer in the longitudinal (z-axis) direction. Such an asymmetric spring rate means that that, for certain orientations of the directional scanning probe relative to the surface, the first stylus deflection direction will be non-parallel to the nominal surface normal of the object.

In one preferred embodiment, the directional scanning probe may comprise a strain gauge probe of the type described in WO2023/036887 that is stiffer and has a much lower stylus deflection range in the longitudinal (z) direction than in the lateral (x-y) plane. The probe described in WO2023/036887 also includes a mechanically defined rest position into which it is urged by its spring mechanism. Alternatively, a scanning probe of the type described in WO02/061378 may be provided in which the spring mechanism allows a much greater longitudinal (z) range and defines a spring-balanced rest position. It would, of course, be possible for the method to be used with other directional scanning probes (i.e., any scanning probe that allows the magnitude and direction of stylus deflection to be measured). Such directional scanning probes may include any suitable type of transducer (e.g., optical, magnetic, inductive, capacitive, strain gauge etc).

Conveniently, the stylus deflection data are collected at the plurality of different collection positions along the inspection path during a single movement of the directional scanning probe towards the object. In other words, all the stylus deflection data may collected during one pass along the inspection path.

In a preferred embodiment, step (i) comprises moving the scanning probe towards the object along the inspection path a plurality of times. Step (ii) may then comprise collecting the stylus deflection data for each of the plurality of different collection positions along the inspection path during different movements of the scanning probe towards and/or away from the object along the inspection path. In other words, multiple repeated passes along the inspection path may be used to collect the stylus deflection data. The stylus deflection data for one collection position may be collected during each movement of the scanning probe along the inspection path.

The motion between the directional scanning probe and the object imparted during step (i) may be at a known speed (i.e., at a known feed rate). The motion between the directional scanning probe and the object imparted during step (i) may be at a constant speed (i.e., at a constant feed rate). In a preferred embodiment, the directional scanning probe may be moved towards the object along the inspection path at a constant and known feed rate. The directional scanning probe may be moved away from the object along the inspection path at a constant and known feed rate. If the imparted motion along the inspection path is both constant and known, the interval between the collection of two sets of stylus deflection data will determine the separation between those two collection positions. Measuring or defining the interval between the collection of different sets of stylus deflection data thus allows the separation of those collection positions to be known (i.e., for use in the calculation of the scaling factor in step (iii)). It is noted that feed rate is sometimes called feed speed.

Instead of using continuous motion, one or more dwells could be provided as the inspection path is traversed. Advantageously, the motion between the directional scanning probe and the object may be halted at each collection position along the inspection path. In other words, a dwell could occur at each collection position. There may be a plurality of dwells during one movement of the directional scanning probe along the inspection path. Alternatively, if there are multiple (repeated) movements along the inspection path a dwell could occur during each such movement at a different one of the plurality of collection positions. For example, motion along the inspection path may be repeated three times with a dwell occur during each traverse of the inspection path at a different one of the collection positions. For example, dwells could be provided at collections positions separated from each other by 40µm. It is noted that not all of the inspection path may be traversed each time in such an example (e.g., the scanning probe may reverse direction and move out of contact with the object after a collection position has been reached) The collection positions may be defined to provide a nominal stylus deflection. For example, collection positions may be used that would nominally produce three stylus deflections of, say, 80µm, 100µm, and 120µm.

Advantageously, the stylus deflection data may be collected at three or more different collection positions along the inspection path. Conveniently, the method comprises an additional step of checking the collected stylus deflection data indicates that the stylus deflections at each collection position lie along a common stylus deflection direction. In other words, a check may be performed to ensure that all the collected stylus deflection data lies along the first stylus deflection direction. It should be noted that the first stylus deflection direction preferably comprises a linear direction (i.e., the stylus deflections may all lie on a straight line). For some scanning probes, the first stylus deflection direction may comprise an arc or locus (e.g., if the stylus pivots about a point on the probe body). However, the expected form of the first stylus deflection direction (e.g., linear, arced etc) would typically be known from the mechanical structure of the scanning probe and hence this check can be used to ascertain that no friction, slip/stick or other similar effects are causing the stylus tip to move in an unexpected manner. If this check is failed, an error flag may be raised and/or the method may be repeated (e.g., at a slower speed or by contacting a different point on the surface of the object).

After the scaling factor has been calculated, it may be used to convert a stylus deflection along the first stylus deflection direction into a scaled stylus deflection value. Advantageously, the method may thus include a step (iv) of moving the stylus into contact with a workpiece and collecting stylus deflection data. The direction of motion provided in step (iv) is preferably selected so that the stylus is deflected substantially along the first stylus deflection direction. As noted below, the workpiece may also comprise the object of step (i) or it may be different. Preferably, a step (v) is also performed of using the scaling factor calculated in step (iii) to convert the stylus deflection data collected in step (iv) into scaled stylus deflection values.

The measurement performed in step (iv) may comprise scanning the stylus along the surface of the workpiece. Advantageously, step (iv) comprises using the coordinate positioning apparatus to move the directional scanning probe along a scan path that causes the stylus to be scanned along the surface of the workpiece. The scan path may also move the directional scanning probe so that its stylus is initially brought into contact with the surface of the workpiece along a direction that is nominally normal to the surface of the workpiece (i.e., a direction that is nominally parallel to the surface normal). Preferably, the scan path is configured to deflect the stylus along the first stylus deflection direction. In other words, the scan path is preferably programmed so that the stylus deflects in the same direction (i.e. along the first stylus deflection direction) that was used to produce the scaling factor of step (iii). As noted above for the inspection path, the scan path defines relative motion between the workpiece and the directional scanning probe; there may be motion of the workpiece alone, motion of the directional scanning probe alone, or motion of both the workpiece and the directional scanning probe.

Although it is preferred that the stylus only deflects along the first stylus deflection direction, this may not always be the case. For example, dynamic or friction effects may cause a slight deviation from the first stylus deflection direction. Advantageously, step (v) may comprise processing the stylus deflection data to filter out components of stylus deflection that do not lie along the first stylus deflection direction. In this manner, the scaled stylus deflection values may describe only the component of stylus deflection along the first stylus deflection direction.

As mentioned above, for certain directional scanning probes (e.g. with asymmetric spring-return forces) the first stylus deflection direction may be angled relative to the surface normal. In such a case, it is also possible to convert stylus deflections along the first stylus deflection direction into stylus deflections along the surface normal direction. Step (v) may thus conveniently comprise determining scaled stylus deflection values that describe stylus deflection along the nominal surface normal direction of the workpiece. This may be done using an appropriate trigonometric function.

The method may also include a further step (vi) of combining the stylus deflection values of step (v) with machine position data. This may allow the position of points on the surface of the object to be found in the machine coordinate system, or a workpiece coordinate system. Alternatively, for example if the stylus deflection values of step (v) are taken using a surface finish stylus, the scaled stylus deflection values may be analysed alone (e.g., to obtain surface roughness measurements).

The object of step (i) may be different to the workpiece of step (iv). For example, a reference object may be used for determining a scaling factor to be used for measuring a workpiece. Advantageously, the object of step (i) comprises the workpiece measured in step (iv). In other words, the same object (i.e. the workpiece) is used to obtain a scaling factor and is then measured. Step (iv) may be performed after steps (i) to (iii). In other words, the inspection path may be traversed before the scan path. The inspection and scan paths may be performed together (i.e., sequentially). The stylus may not leave the surface of the object (workpiece) between the motion along the inspection and scan paths (i.e. to perform calibration and measurement scans in one go). In other words, the steps (i) and (iv) may be performed without the stylus leaving surface of the workpiece.

As mentioned above, the scanning probe may include different types of stylus. Advantageously, the stylus of the directional scanning probe comprises a surface finish stylus. For example, it may comprise a unidirectional spike or needle or a disk. In such a case, steps (iv) and (v) of the method could provide surface finish measurements (e.g. deviation in height along surface normal as a function of position along the scan path). Alternatively, a stylus ball could be provided to take form measurements. A stylus may also be provided that includes a plurality of stylus tips. For example, a so-called star stylus assembly may be provided that has a plurality of tips extending from a stem in different directions. Steps (i) to (iii) of the method may be performed for each tip, thereby generating different scaling factors for use when measuring with different stylus tips.

According to a second aspect, the present invention provides a coordinate positioning apparatus comprising a directional scanning probe, wherein;
the directional scanning probe comprises a probe body, a stylus extending from the probe body and measuring transducers for producing stylus deflection data describing the magnitude and direction of stylus deflection relative to the probe body in a probe coordinate system, and
the coordinate positioning apparatus comprises a controller for moving the directional scanning probe relative to an object to be measured, the controller being configured to:
   (i) move the directional scanning probe towards the object along an inspection path that is nominally normal to a surface of the object, the motion along the inspection path causing the stylus to make contact with the surface of the object and thereafter deflect in a first stylus deflection direction relative to the probe body,
   (ii) collect stylus deflection data at a plurality of different collection positions along the inspection path, the plurality of different collection positions having a known separation from each other, and
   (iii) calculate a scaling factor for converting stylus deflection data describing a stylus deflection along the first stylus deflection direction into a scaled stylus deflection value, the calculation using the collected stylus deflection data and the known separation of the collection position.

The controller may include a numerical controller and/or one or more separate computers or interfaces that together control the apparatus. Other preferred features of the apparatus of this aspect of the invention are described above in the context of the associated method.

Also described herein is a method for using a scanning probe. The scanning probe may be a directional scanning probe. The scanning probe may be mounted to a coordinate positioning apparatus. The scanning probe may comprise a probe body. The scanning probe may comprise a stylus. The stylus may extend from the probe body. The scanning probe may include one or more transducers. The one or more transducers may produce stylus deflection data. The stylus deflection data may describe the magnitude of stylus deflection relative to the probe body. The stylus deflection data may describe the direction of stylus deflection relative to the probe body. The stylus deflection may be measured in a probe coordinate system. The coordinate positioning apparatus may be configured to move the directional scanning probe relative to an object to be measured.

The method may comprise a step of using the coordinate positioning apparatus to move the directional scanning probe towards the object along an inspection path. The inspection path may be nominally normal to a surface of the object. The motion along the inspection path may cause the stylus to make contact with the surface of the object. The motion along the inspection path may cause the stylus to deflect in a first stylus deflection direction relative to the probe body. The method may include a step of collecting stylus deflection data. The stylus deflection data may be collected at a plurality of different collection positions along the inspection path. The plurality of different collection positions may have a known separation from each other. The method may include a step of using the collected stylus deflection data and the known separation of the collection positions to calculate a scaling factor for converting stylus deflection data describing a stylus deflection along the first stylus deflection direction into a scaled stylus deflection value. The method may include any one or more of the above steps and/or any one or more of the steps of the method described herein.

The invention will now be described, by way of example only, with reference to the accompanying drawings in which;
Figure 1 shows a scanning probe carried by a machine tool,
Figure 2 illustrates deflecting the stylus of a scanning probe,
Figures 3(a) shows the stylus of a three-dimensional scanning probe being brought into contact with a vertical surface,
Figure 3(b) shows the stylus deflection that occurs during the motion shown in figure 3(a),
Figure 3(c) show the measured stylus deflection plotted as function of position along the inspection path,
Figure 4(a) shows the stylus of a three-dimensional scanning probe being brought into contact with an inclined surface,
Figure 4(b) shows the stylus deflection that occurs during the motion shown in figure 4(a),
Figure 5(a) shows the stylus of a two-dimensional scanning probe being brought into contact with an inclined surface,
Figure 5(b) shows the stylus deflection that occurs during the motion shown in figure 5(a),
Figure 6 illustrates performing a scan along a workpiece surface using the two-dimensional scanning probe shown in figures 5(a) and 5(b),
Figure 7 shows how a surface deflection component perpendicular to the surface can be derived, and
Figure 8 illustrates a star-stylus cluster that includes stylus tips for form and surface finish measurement.

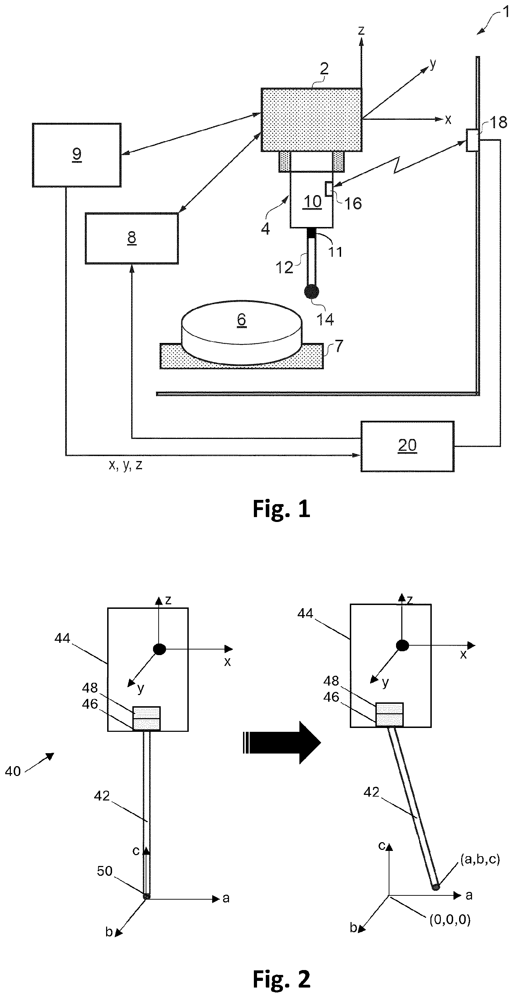

Referring to figure 1, there is illustrated a machine tool 1, which is one example of a coordinate positioning apparatus, having a spindle 2 holding a scanning probe 4.

The machine tool 1 includes various motors 8 for moving the spindle 2 relative to a workpiece 6 located on a workpiece holder 7 within the working volume of the machine tool. The location of the spindle within the working volume of the machine tool is accurately measured in a known manner using encoders 9 that provide "machine position data" in the machine coordinate system (x,y,z). A numerical controller (NC) 20 of the machine tool controls the (x,y,z) movement of the spindle 2 within the work area of the machine tool and also receives information (i.e. machine position data) from the various encoders 9 that measure the spindle position. The term numerical controller as used herein should be understood to mean any part of the numerical control system of the machine tool, for example it could include a programmable logic controller (PLC) and drive controllers etc.

The scanning probe 4 comprises a probe body 10 that is attached to the spindle 2 of the machine tool using a standard releasable shank connector. The scanning probe 4 also comprises a deflectable stylus holder 11 to which a workpiece contacting stylus 12 is attached. The deflectable stylus 12 thus protrudes from the probe body 10. The stylus shown in figure 1 is a form measurement stylus that has a ruby stylus ball 14 at its distal end for contacting the associated workpiece 6. The scanning probe 4 generates digitised stylus deflection data (which can also be termed probe data) that describes deflection of the stylus 12 in a local probe coordinate system. For example, a stream of (a,b,c) stylus deflection values may be generated by the scanning probe 4. The scanning probe 4 includes, in this embodiment, a strain gauge transducer arrangement of the type described in WO2023/036887.

The scanning probe 4 also comprises a wireless transmitter/receiver portion 16 for passing the stylus deflection data to a corresponding wireless receiver/transmitter portion of a probe interface 18. The wireless link may be, for example, RF or optical. In this embodiment, a radio communications link is provided. For other machine tool configurations, a hard-wired probe could also be used. The NC 20 receives the machine position data (x,y,z) from the encoders 9 and the stylus deflection data (a,b,c) from the probe interface 18. The stylus deflection data may then be appropriately analysed. For example, for form measurements of the object the machine position data and the stylus deflection data may be combined to determine the position of multiple points on the surface of the workpiece 6. It should be noted that the combination of machine and stylus deflection data may alternatively be performed by a computer that is separate to the NC and that real-time access to the machine position data is not possible for some types of machine tool.

Figure 2 shows in more detail a directional scanning probe 40 that could be installed on a machine tool of the type described with reference to figure 1. The directional scanning probe 40 comprises a stylus 42 that is movably attached to a probe body 44 by a deflection mechanism 46. The whole scanning probe 40 can also be translated relative to an object along the linear (x, y, z) axes of the machine tool on which it is carried. It should be noted that rotation of the scanning probe 40 by the machine tool about one or more axes may also be possible, but for simplicity only translational motion will be described.

The scanning probe 40 also includes a transducer mechanism 48 that measures the deflection of the stylus 42. In particular, the transducer mechanism 48 is arranged to allow the position of the stylus tip 50 to be measured in a local (probe) coordinate system. The scanning probe 40 is thus configured to generate stylus deflection data in the form of sets of (a, b, c) stylus deflection values that describe the position of the centre of the stylus tip 50 in the probe coordinate system.

For the purpose of explaining the present invention, the deflection mechanism 46 of the scanning probe 40 of this embodiment is assumed to have a perfectly symmetrical spring force. This means that the stylus tip 50 can be moved by the same distance in any of the a, b or c directions by applying a certain external force. The scanning probe 40 is thus a three-dimensional scanning probe with uniform or symmetric spring return forces. Applying a force to the stylus tip 50 can thus result in deflection of the stylus tip away from a home or rest position shown on the left-hand side of figure 2. Deflection of the stylus tip from the rest position (0,0,0) to the position (a1, b1, c1) is shown on the right-hand side of figure 2, noting that no object for applying such an external force to the stylus is shown in figure 2 for ease of illustration.

A stylus tip (a,b,c) deflection as measured by the scanning probe can be converted into a deflection in the machine coordinate system and combined with corresponding machine position data to define a position of the stylus tip in the machine coordinate system. The position of a point on the surface of an object in contact with the stylus tip can then be determined in the machine coordinate system. It should be noted that the stylus tip deflection is measured by the transducer mechanism 48 at the base of stylus and hence the length, straightness etc of the stylus needs to be taken into account. This is why a calibration procedure, for example as described in WO00/25087 or WO2007/125306, is typically performed when a scanning probe is first used or when the stylus of such a scanning probe is changed. As explained above, a typical calibration procedure involves taking multiple measurements of a calibration sphere from multiple directions to generate a probe transformation matrix that allows positions in the probe coordinate system to be mapped to the machine coordinate system.

The present inventors have, however, found that it is not always possible or desirable to generate a probe transformation matrix. In particular, prior art calibration processes typically and necessarily involve measuring a calibration sphere from multiple directions using multiple stylus deflections. For some machine, scanning probe or stylus configurations there are access constraints which mean it is simply not possible to measure a calibration artefact from the required different directions. Furthermore, certain styli (e.g., surface finish styli) have sharp tips that can become damaged or worn if used to scan a calibration artefact or can damage the artefact during such a scanning process. Furthermore, it is often not necessary to produce a full probe transformation matrix if the scanning probe is only going to be used for certain measurements.

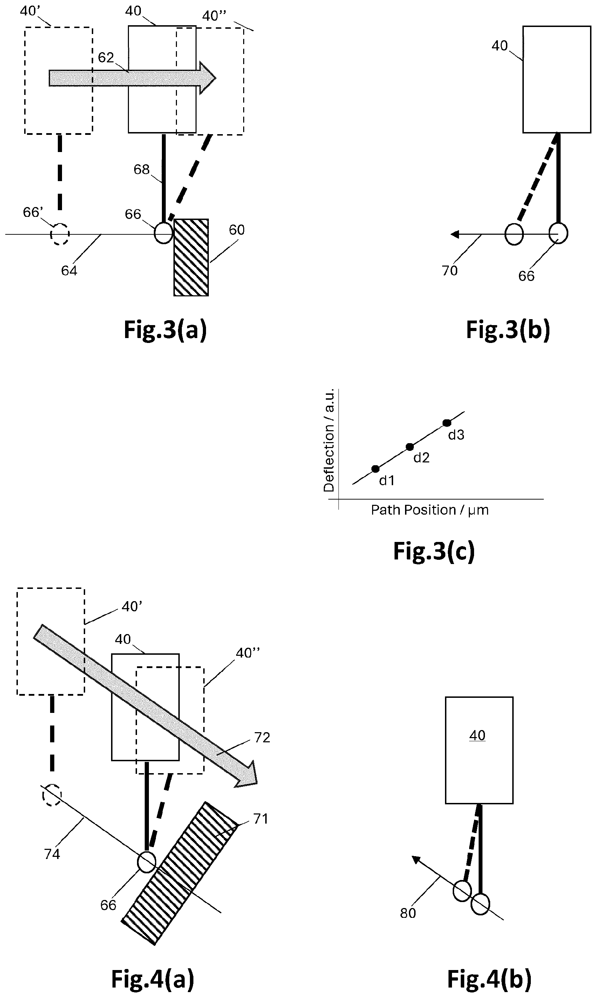

Referring to figures 3(a) to 3(c), a method in accordance with the present invention will be described for determining a scaling factor for a three-dimensional scanning probe 40.

As shown in figure 3(a), the scanning probe 40 is moved along an inspection path under the control of the machine tool towards an object 60. The probe is initially located in a start or stand-off position (see the scanning probe 40' in dashed outline) before being moved towards the object 60. The inspection path causes the probe body to move in the direction indicated by the first arrow 62, which is parallel to the illustrated first surface normal 64 of the object. The stylus tip 66 of the stylus 68 thus moves along the first surface normal 64 (from left to right) until it makes contact with the surface of the object 60. The body of the scanning probe 40 continues to move after the stylus tip 68 contacts the object (see the scanning probe 40" in dashed outline), thereby deflecting the stylus 68.

Figure 3(b) shows the effect of the motion described with refence to figure 3(a) from the frame of reference of the scanning probe 40. The motion into the object's surface causes the stylus tip 66 to deflect along the first deflection direction 70. This first deflection direction 70 is parallel to the first surface normal 64 of the object 60.

Referring to figure 3(c), a scaling factor is determined by collecting stylus deflection data at a plurality of different collection positions along the inspection path after the stylus has made contact with the object. In the present example, the motion along the inspection path is halted at a first collection position, a second collection and a third collection position. These first, second and third collection positions are set at 40µm, 80µm and 120µm from the nominal position where the stylus first makes contact with the surface. In other words, the controller of the machine tool is programmed to halt motion of the scanning probe at the first collection position along the inspection path for long enough to enable a first set of stylus deflection data to be collected by the scanning probe. The controller then causes the scanning probe to move a further 40µm along the inspection path to the second collection position, before halting motion and collecting a second set of stylus deflection data. The controller then causes the scanning probe to be move a further 40µm along the inspection path to the third collection position, before halting motion and collecting a third set of stylus deflection data.

In figure 3(c), the stylus deflection along the first deflection direction 70 (plotted on the y-axis) is shown as a function of position along the inspection path (plotted on the x-axis). The three measured points (d1, d2 and d3) are shown fitted to a straight line that has a gradient that defines the scaling factor. Use of the scaling factor allows a deflection measured by the probe along the first deflection direction 70 to be converted into a distance along the first surface normal 64.

As explained below, it is not necessary to know the absolute position of the collection points in the machine coordinate system. Instead, only the separation of the collections points from each other may be defined. For example, the probe motion may be halted at first, second and third collection points that are programmed to be separated from each other by a certain distance (e.g., 40µm). It is also not necessary for the probe motion to be halted when taking such measurements. For example, if the probe was moving along the inspection path at a constant speed the stylus deflection data could be collected at defined (e.g., regular) intervals thereby allowing the separation of the collections positions to be established. Using fewer (i.e., two) or more than three collection positions would also be possible.

Referring next to figures 4(a) and 4(b), there is described the measurement of an inclined surface using the same probe 40 as described with reference to figures 3(a)-3(c).

Figure 4(a) shows a second object 71 with an upper surface to be measured that has a second surface normal 74. The machine tool is programmed to move the scanning probe 40 along a second inspection path, starting from the initial position shown by the dashed outline of the scanning probe 40' and into contact with the surface of the second object 71. The direction of scanning probe motion is indicated by the second arrow 72, which is parallel to the second surface normal 74. Again, continued motion of the scanning probe 40 after the stylus tip 66 has made contact with the second object 71 causes the stylus to deflect.

Figure 4(b) shows the effect of the motion described with refence to figure 4(a) from the frame of reference of the scanning probe 40. The motion into the object's surface causes the stylus tip 66 to deflect along the second deflection direction 80. This second deflection direction 80 is parallel to the second surface normal 74 of the second object 71. Again, a scaling factor can be determined by collecting stylus deflection data at three collection positions of known separation along the inspection path. This scaling factor will allow stylus deflections along the second deflection direction 80 as measured by the scanning probe to be converted into deflection distances along the second surface normal 74.

The above examples include a three-dimensional scanning probe 40, which by definition has a stylus that can deflect in three directions (i.e., along the a, b and c axes) and has a uniformly sprung deflection mechanism that returns the stylus to a rest position in the absence of an applied external force. Many scanning probes, however, may have deflection mechanisms that only allow stylus deflection in a limited number of directions. For example, a two-dimensional scanning probe may only allow stylus deflection along two (e.g., x, y or a, b ) axes. Even if stylus deflection is permitted along three axes, the spring rate of each axis may be different. For example, the deflection mechanism may be much stiffer in one axis (e.g., the z or c-axis that coincide with longitudinal axis of the stylus) than the other axes.

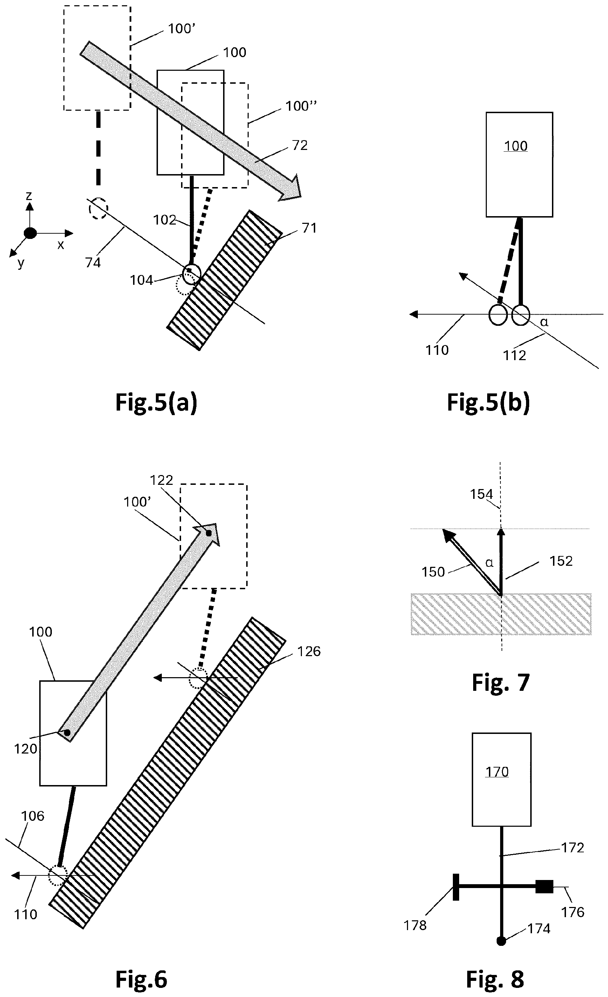

Referring to figures 5(a) and 5(b), there is shown a two-dimensional scanning probe 100. The scanning probe 100 has a stylus 102 with a stylus tip 104 that can deflect in the lateral (a-b) plane but is completely rigid (i.e. does not deflect at all) along its longitudinal (c) axis.

Referring to figure 5(a), the angled second object 71 described above with reference to figures 4(a) and 4(b) can be measured by advancing the scanning probe 100 along the second inspection path toward the second object 71. The scanning probe 100 thus moves in the direction shown by the second arrow 72 which is parallel to the second surface normal 74. Again, motion of scanning probe 100 may be initiated with the probe in free-space at a point along the second inspection path that is spaced apart from the object (e.g., at the start position shown by the dashed outline of the scanning probe 100').

Although the relative motion between the scanning probe 100 and the object 71 is the same as that described in figures 4(a) and 4(b), the constraints on stylus deflection for the scanning probe 100 means that the stylus tip 102 does not move along the second surface normal direction 74 after it has made contact with the surface of the second object 71. Instead, additional lateral motion of the stylus tip 102 occurs.

Referring to figure 5(b), the stylus deflection that occurs during the motion described with reference to figure 5(a) is shown in the reference frame of the scanning probe. The stylus tip deflects along the third deflection direction 110. The direction of such stylus tip deflection does not coincide with the surface normal of the object because stylus motion relative to the probe body is constrained to only occur in a lateral direction (i.e., because of the deflection mechanism of the scanning probe). The third deflection direction 110 and the surface normal direction 112 thus differ by an angle α.

In a manner similar to that described above, a scaling factor can be found for deflections that occur along the third deflection direction 110. In particular, stylus deflection values (which will lie along the third deflection direction110) can be collected at first, second and third collections positions along the second inspection path. A scaling factor can then be calculated using the known first, second and third collection positions and the three stylus deflection values measured at those collection positions.

Referring next to figure 6, it will be described how the two-dimensional scanning probe 100 described with reference to figures 5(a) and 5(b) can be used to perform a measurement scan along the surface of a workpiece 126. In particular, a process will be described for generating scaled stylus deflection values using the scaling factor calculated above.

Firstly, the scanning probe is moved towards the surface of the object along the surface normal direction 106 until a nominal stylus deflection is achieved. This nominal stylus deflection is preferably close to the range of stylus deflections used in the previous calculation of the scaling factor. More importantly, motion into the surface along the surface normal direction 106 ensures that the stylus is deflected along the third deflection direction 110 described above with reference to figure 5(b) for which the scaling factor has been determined.

After contacting the surface, the machine tool is programmed to move the scanning probe along a scan path from the illustrated start position 120 to the end position 122. The stylus tip is thus scanned (traced) along a path on the surface of the object that is nominally parallel to the surface and multiple stylus deflection data are collected as the scan path is traversed. As the stylus is moved along the scan path, it will thus deflect back and forth along the third deflection direction 110 depending on the local surface height.

To derive surface position measurements, the previously calculated scaling factor is applied to the collected stylus deflection data. This scaling factor converts stylus deflections in the local probe coordinate system into deflections (distances) along the third deflection direction 110 defined in the machine coordinate system. In other words, the probe outputs at each scanned point on the surface of the object 120 are scaled by the scaling factor to provide a scaled stylus deflection value in the machine coordinate system. Each scaled stylus deflection value may then be combined with corresponding machine position data to provide a measured position on the surface of the object.

It should be noted that although the stylus is expected to deflect along the third deflection direction 110 as it is moved along the scan path, there may be other effects (e.g., dynamic, friction, slip/stick effects etc) that cause the direction of stylus deflection to deviate slightly from the third deflection direction 110. To mitigate such effects, the component of stylus deflection along the third deflection direction 110 may be extracted from the resultant stylus deflection that is measured by the scanning probe. This component of stylus deflection along the third deflection direction 110 may then be scaled using the scaling factor to generate the scaled stylus deflection values. In this manner, effects other than stylus deflection in the expected direction can be removed from the stylus deflection used to generate the scaled stylus deflection values.

Referring to figure 7, it will be described how the scaled stylus deflection values may also be adjusted to lie along the surface normal.

As explained above, the stylus deflections measurements collected by the scanning probe 100 as described with reference to figure 6 describe stylus deflection along the third deflection direction 110. The scaling factor calculated as described with reference to figures 5(a) and 5(b) may then be used to determine a scaled stylus deflection value along the third deflection direction 110. Such scaled stylus deflection values define a distance or length that is linked to distances as measured in the machine coordinate system. As shown in figure 7, this would mean stylus deflection values would still be reported along the third deflection direction (i.e. as shown in figure 7 by the illustrated first vector 150). For some type of measurements this may be acceptable, however it is typically preferred to generate stylus deflection values that describe deflection along the surface normal direction 154.

In this example, the third deflection direction (along which vector 150 extends) subtends an angle α to the surface normal direction 154 and this angle α can be measured during the process to determine the scaling factor. It is therefore possible, using simple trigonometry, to determine a vector component 152 of stylus deflection that lies along the surface normal direction 154. In other words, although the stylus does not physically deflect along the surface normal, the scaled stylus deflection values may be adjusted to describe the stylus deflection that would occur along the surface normal direction if the spring return forces of the scanning probe had been symmetrical.

As mentioned above, the scaled stylus deflection values may be combined with machine data for certain types of measurement (e.g., for form or part setup measurement). However, other types of measurement (e.g., surface finish measurements) may only require the measurement of relative stylus deflections along the scan path (e.g., describing local changes in surface height to obtain a surface roughness value). In such a measurement, tying points back to the machine coordinate system is not required. However, in such examples, the calculation of scaled stylus deflection values along the surface normal direction is preferred.

The examples that are outlined above describe a completely symmetrical 3D scanning probe and a purely 2D scanning probe that does not allow any stylus motion along the longitudinal (z) direction. These examples of scanning probes are merely used to illustrate the underlying concept of the present invention. As would be appreciated by a person skilled in the art, known scanning probes would likely be asymmetrical to a lesser or greater extent, depending on their physical construction. For example, a strain gauge probe of the type described in WO2023/036887 is significantly stiffer and has a much lower stylus deflection range in the longitudinal (z) direction than in the lateral plane. The capacitive probe described in WO02/061378 is more evenly sprung and has much a greater longitudinal (z) range than a strain gauge probe, but it still not perfectly symmetrical. The present invention could be applied to any scanning probe where both the magnitude and direction of stylus deflection is measured, irrespective of the probe structure. It should be noted that the amount of stylus deflection is also greatly exaggerated in the above-described drawings in order to illustrate the principles of the present invention. Typically, there would only be tens or hundreds of microns of stylus deflection for styli that are many centimetres long.

Furthermore, in addition to taking form measurements using a stylus with a spherical tip as described above it is also possible to attach different types of styli to the scanning probe to measure other properties of the object or workpiece. For example, the use of a smaller stylus tip allows finer details about the surface to be measured. Styli may thus be used that measure the arithmetic mean roughness (Ra), the arithmetic mean waviness (Wa), mean roughness depth (Rz), the mean peak width (Rsm), the total profile height (Wt) etc. Due to the very specific nature of the different measurement tasks, it is typically necessary to have a specific stylus for each application for reasons of contact pressure, access, and performance. Such measurements are typically called surface finish or surface condition measurements, as opposed to form measurements which describe the general shape (form) of the object. Any surface finish styli are preferably un-skidded styli. It is also possible for multiple stylus tips to be attached together to a scanning probe.

Referring to figure 8, a scanning probe 170 carrying a multi-tipped stylus arrangement (or so-called star-stylus) is illustrated. The scanning probe 170 holds a stylus stem 172 to which is attached a first stylus tip 174, a second stylus tip 176 and third stylus tip 178. The first stylus tip 174 comprises a sphere and is located on the longitudinal axis of the stylus stem 172. The second stylus tip 176 is located approximately halfway along the stylus stem 172 and extends perpendicular from the stylus stem 172. The second stylus tip 176 comprises a sharp pin for measuring surface roughness. The third stylus tip 178 and extends perpendicular from the stylus stem 172 in the opposite direction to the second stylus tip 176. The third stylus tip 178 comprises a disk for measuring surface waviness.

The method of the present invention could be applied for measurements taken with any one or all of the different stylus tips of the multi-tipped stylus arrangement. In other words, a scaling factor could be calculated for all or some of the different stylus tips for subsequent use for measuring workpieces with such a tip.

It should also be noted that the object used when determining the scaling factor may be the same object that is then scanned. It would be possible to have two distinct stages of measurement, for example a first stage to determine the scaling factor and second stage of measuring an object. However, it would also be possible to combine these stages. For example, the probe could be moved into contact with a workpiece (e.g., along an inspection path) and then scanned along the surface (e.g., along a scan path). The motion into the surface could provide the stylus deflection data to calculate a scaling factor that is then applied to the stylus deflection values collected along the scan path. In this manner, no prior calibration is required.

It should also be remembered that the above are merely examples of the present invention. The skilled person reading the above would appreciate the various alternatives that would be possible in accordance with the present invention.

## Claims

1. A method of using a directional scanning probe mounted to a coordinate positioning apparatus, the directional scanning probe comprising a probe body, a stylus extending from the probe body and measuring transducers for producing stylus deflection data describing the magnitude and direction of stylus deflection relative to the probe body in a probe coordinate system, the coordinate positioning apparatus being configured to move the directional scanning probe relative to an object to be measured, the method comprising the steps of;
(i) using the coordinate positioning apparatus to move the directional scanning probe towards the object along an inspection path that is nominally normal to a surface of the object, the motion along the inspection path causing the stylus to make contact with the surface of the object and thereafter deflect in a first stylus deflection direction relative to the probe body,
(ii) collecting stylus deflection data at a plurality of different collection positions along the inspection path, the plurality of different collection positions having a known separation from each other, and
(iii) using the collected stylus deflection data and the known separation of the collection positions to calculate a scaling factor for converting stylus deflection data describing a stylus deflection along the first stylus deflection direction into a scaled stylus deflection value.

2. A method according to claim 1, wherein the stylus is connected to the probe body by a spring mechanism having an asymmetric spring rate such that, for certain orientations of the directional scanning probe relative to the surface, the first stylus deflection direction is non-parallel to the nominal surface normal of the obj ect.

3. A method according to any preceding claim, wherein the stylus deflection data are collected at the plurality of different collection positions along the inspection path during a single movement of the directional scanning probe towards the object.

4. A method according to any one of claims 1 to 2, wherein step (i) comprises moving the scanning probe towards the object along the inspection path a plurality of times, and step (ii) comprises collecting the stylus deflection data for each of the plurality of different collection positions along the inspection path during different movements of the scanning probe towards and/or away from the object along the inspection path.

5. A method according to any preceding claim, wherein the directional scanning probe is moved towards and/or away from the object along the inspection path at a constant and known feed rate.

6. A method according to any one of claims 1 to 4, wherein the motion between the directional scanning probe and the object is halted at each collection position along the inspection path.

7. A method according to any preceding claim, wherein the stylus deflection data is collected at three or more different collection positions along the inspection path and the method comprises an additional step of checking the collected stylus deflection data indicates that the stylus deflections at each collection position lie along a common stylus deflection direction.

8. A method according to any preceding claim, comprising the further steps of;
(iv) moving the directional scanning probe so that the stylus is brought into contact with a workpiece and collecting stylus deflection data, and
(v) using the scaling factor calculated in step (iii) to convert the stylus deflection data collected in step (iv) into scaled stylus deflection values.

9. A method according to claim 8, wherein step (iv) comprises using the coordinate positioning apparatus to move the directional scanning probe along a scan path that causes the stylus to be scanned along the surface of the workpiece, the scan path being configured to deflect the stylus along the first stylus deflection direction.

10. A method according to any one of claims 8 to 9, wherein step (v) comprises processing the stylus deflection data to filter out components of stylus deflection that do not lie along the first stylus deflection direction.

11. A method according to any one of claims 8 to 10, wherein step (v) comprises determining scaled stylus deflection values that describe stylus deflection along the nominal surface normal direction of the workpiece.

12. A method according to any one of claims 8 to 11, wherein the object of step (i) comprises the workpiece measured in step (iv).

13. A method according to claim 12, wherein the steps (i) and (iv) are performed without the stylus leaving the surface of the workpiece.

14. A method according to any preceding claim, wherein the stylus of the directional scanning probe comprises a surface finish stylus.

15. A coordinate positioning apparatus comprising a directional scanning probe, wherein;
the directional scanning probe comprises a probe body, a stylus extending from the probe body and measuring transducers for producing stylus deflection data describing the magnitude and direction of stylus deflection relative to the probe body in a probe coordinate system, and
the coordinate positioning apparatus comprises a controller for moving the directional scanning probe relative to an object to be measured, the controller being configured to:
(i) move the directional scanning probe towards the object along an inspection path that is nominally normal to a surface of the object, the motion along the inspection path causing the stylus to make contact with the surface of the object and thereafter deflect in a first stylus deflection direction relative to the probe body,
(ii) collect stylus deflection data at a plurality of different collection positions along the inspection path, the plurality of different collection positions having a known separation from each other, and
(iii) calculate a scaling factor for converting stylus deflection data describing a stylus deflection along the first stylus deflection direction into a scaled stylus deflection value, the calculation using the collected stylus deflection data and the known separation of the collection position.
